# EUROPEAN PATENT SPECIFICATION

(11) **EP 1 610 041 B1**
(45) Date of publication and mention of the grant of the patent: **17.03.2010**
(21) Application number: 04722462.1
(22) Date of filing: 22.03.2004
(51) Int. Cl.: F16J 15/08, F16L 23/20

(54) **RING-SHAPED METAL GASKET**
RINGFÖRMIGE METALLDICHTUNG
JOINT D'ETANCHEITE METALLIQUE ANNULAIRE

(30) Priority: 31.03.2003 JP 2003095176
(43) Date of publication of application: 28.12.2005
(73) Proprietor: NICHIAS CORPORATION, Tokyo 105-8555 (JP); HONDA MOTOR CO., LTD., Tokyo 107-8556 (JP)
(72) Inventor: TAKAHIRO, Kenichi, Hamamatsu-shi, Shizuoka 4312103 (JP); MORI, Hideaki, Hamamatsu-shi, Shizuoka 4312103 (JP); HANASHIMA, Kanji, Hamamatsu-shi, Shizuoka 4312103 (JP); OIKAWA, Toshihiro, Wako-shi, Saitama 3510193 (JP)
(74) Representative: Müller-Wolff, Thomas
(86) International application number: PCT/JP2004/003829
(87) International publication number: WO 2004/088181

(56) References cited:
- EP-A- 0 277 724
- FR-A- 2 102 818
- GB-A- 1 267 662
- JP-A- 2 138 575
- JP-A- 8 144 849
- JP-U- 57 061 146
- JP-U- 58 173 872
- US-A- 3 595 588
- US-E- R E33 199

## Description

### TECHNICAL FIELD

The present invention relates to a ring-shaped sealing metal gasket which is not plastically deformed even if a large compressive load is applied, presenting an excellent durability and stable displacement follow-up capacity, which is disposed between two sealing object members subject to displacement in state of compression.

### BACKGROUND ART

Conventionally, a rubber-made gasket, a resin-made gasket or a metal gasket represented by an O-ring has been used as the seal for a vacuum apparatus and the seal for a pressure fluid pipe and the like. Of these, such metal gaskets as so-called letter C shaped ring, letter S shaped ring and letter E shaped ring have been used at a place requiring elastic restoration performance under high temperature environment.

The letter E shaped ring has been disclosed in, for example, patent document 1, Japanese Patent Application Laid-Open No.2002-5290. The gasket having the E-shaped section has solved a problem of the gasket having the C-shaped section that improving its sealing performance lowers its displacement follow-up capacity and improving the displacement follow-up capacity lowers the sealing performance. Consequently, an excellent sealing performance can be obtained by exerting elastic repulsive force (sealing load) against a compressive load and at the same time, the gasket deflects elastically in a wide range, so that expansion force corresponding to deflection of the compressive load is exerted so as to obtain an excellent displacement follow-up capacity.

Japanese Patent Application Laid-Open No.HEI8-145183 of the patent document 2 has disclosed a vacuum sealing gasket which is a metallic elastic structure body having V-shaped or W-shaped longitudinal section and composed of rubber films 0.1 m to 0.5 mm thick for a sealing face, while a rubber ring is fitted to a valley portion of the metallic elastic structure body. According to this vacuum sealing gasket, because the metallic elastic structure body follows up uneven sealing gap in the sealing portion and the rubber film having a high shape restoration capacity to be combined is formed thin, the quantity of discharged gas even in even a super vacuum region is small and further this can be used repeatedly.
(Patent document 1) Japanese Patent Application Laid-Open No.2002-5290 (Claim 1)
(Patent document 2) Japanese Patent Application Laid-Open No.HEI8-145183 (Claim 1 to Claim 3)

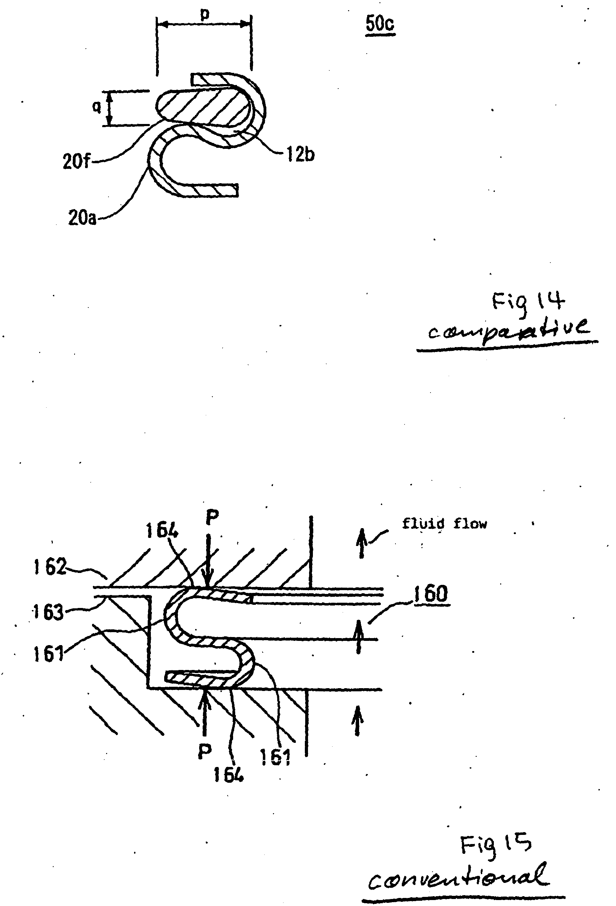

However, as for a conventional S-shaped gasket or E-shaped gasket, if a large compressive load P over the elasticity limit of its shape is applied as shown in FIG. 15, stress is concentrated to the rear faces of the C-shaped section portions 161, 161 so that plastic deformation occurs. In this case, there is such a problem that no sealing performance is secured because its elastic repulsive force cannot be exerted. In the meantime, in FIG. 15, reference numerals 162, 163 denote a sealing object member. Further, if it receives vibration under a compressive load near its elasticity limit repeatedly, there is another problem that the gasket undergoes metal fatigue so that fatigue destruction occurs, thereby durability being dropped. In case where a difference in pressure between the fluid side to be sealed and the non-fluid side on an opposite side is high, usually, the S-shaped or E-shaped ring gasket is manufactured of a thin plate to secure plasticity, and there is another problem that it may be damaged due to that pressure difference. Further, a gasket produced by combining rubber rings as disclosed in Japanese Patent Application Laid-Open No.HEI8-145183 is not yet sufficient for assisting elasticity of the metallic elastic structure body and it cannot be used under high temperatures.

From EP 0 277 724 a pressure-balanced seal of s-shape for sealing radially facing but offset surfaces is known, which is to be installed in a stationary position, having elastic corrugations and tapered ring legs. In case of distal ring legs, that cannot engage the inner or outer surface of concentric pipes, this document teaches to couple restraining rings rigidly to the inner or outer surface of one of the outer legs e.g. by welding. Such known seals accommodate the axial compression during installation and provide sufficient stability of offset sealing lines. How to improve follow-up capacity in case of vibrations during use is not disclosed.

From JP 2-138575 an E-shaped seal with a metal core and a hollow, elliptical cross-section and at least one outer shell, which surrounds an outer circumference of the metal core, is known. Such seals will contract upon a compressive load at a specific transformation point. During contraction core and shell are deformed to provide two concentric sealing lines, which will seal the surfaces via two concentric circles. Such seals provide tight seals during installation via two sealing lines. How to ensure reliable sealing-action in case of varying pressure due to vibrations is not disclosed.

JP8-144849 discloses a ring shaped sealing metal gasket in accordance with the preamble of claim 1.

Accordingly, an object of the present invention is to provide a ring-shaped sealing metal gasket of stable displacement follow-up capacity in a state of compression and which is free of plastic deformation even if a large compressive load is applied thereto and difficult to undergo fatigue destruction and hard to damage even if a difference in pressure between the fluid side to be sealed and the non-fluid side on an opposite side is high.

### DISCLOSURE OF THE INVENTION

Under such a situation, as a result of a keen examination, the inventor of the present invention and other people have found out that the ring-shaped metal gasket having an S-shaped section or an E-shaped section, in which the metallic ring is fitted to at least one of two or three valley portions thereof, is free of plastic deformation even when a large compressive load is applied and difficult to undergo fatigue destruction and then, reached accomplishment of the present invention.

That is, the present invention (1) provides a ring-shaped metal gasket which is disposed between two sealing object members and in which at least two pieces of valley portions dented in a second direction perpendicular to a first direction extending from a contact portion of one sealing object member to the other sealing object member are provided, wherein metallic rings are fitted to at least two of the valley portions. With such a structure, even if a large compressive load is applied, the metallic rings fitted to the valley portion act as a reinforcement member thereby suppressing plastic deformation of the ring-shaped metal gasket and at the same time, preventing generation of metal fatigue in the ring-shaped metal gasket. If metallic rings are provided on both the valley portions on the fluid side and non-fluid side, an influence upon the metal gasket by changes in pressure on the fluid side and non-fluid side can be suppressed. In the invention the rings are only located on the fluid side.

The present invention (2) provides the ring-shaped metal gasket wherein at least one of the metallic rings is fitted to the valley portion on a lower pressure side of a fluid side to be sealed and a non-fluid side on an opposite side. With such a structure, even if a difference in pressure between the fluid side to be sealed and the non-fluid side on an opposite side increases, the ring-shaped metal gasket can be formed thin because a reinforcement metallic ring is fitted to a deformation side, so that the weight thereof can be reduced and damage accompanied by the reduction of the thickness can be suppressed.

Further, the present invention (3) provides the ring-shaped metal gasket wherein at least one of the metallic rings is fitted to the valley portion on a lower temperature side of the fluid side to be sealed and the non-fluid side on an opposite side. According to the present invention, heat received by the ring-like gasket is transmitted to a sealing object member thereby suppressing heat influence upon the metallic ring and at the same time improving its heat resistance.

Further, the present invention (4) provides the ring-shaped metal gasket wherein the metallic rings are fitted to all the valley portions of the ring-shaped metal gasket. According to the present invention, it is not necessary to take care of a position (direction) in which the metallic ring is fitted when installing the ring-shaped metal gasket and therefore, mistake in the installation can be prevented. Further, because this ring-shaped metal gasket can substitute a gasket in which a metallic ring is fitted to only one side of plural valley portions, it is not necessary to prepare the gasket in which the metallic ring is fitted to only this one side for a special purpose and thus, the quantity of components can be reduced.

Further, the present invention (5) provides the ring-shaped metal gasket wherein the maximum dimension in the diameter direction of a longitudinal section of the metallic rings is larger than the maximum dimension in a direction perpendicular to the diameter direction thereof. According to the present invention, an effect of suppressing the plastic deformation in the vicinity of a junction point between the C-shaped section portion and the inverted-C shaped section portion in, for example, an S-shaped or inverted S-shaped metal gasket is great.

Further, the present invention (6) provides the ring-shaped metal gasket wherein the metallic rings are metallic O-rings, metallic irregular cross section rings or metallic rectangular cross section rings. According to the present invention, when manufacturing the ring-shaped metal gasket, a room for material selection is increased.

### BRIEF DESCRIPTION OF THE DRAWINGS

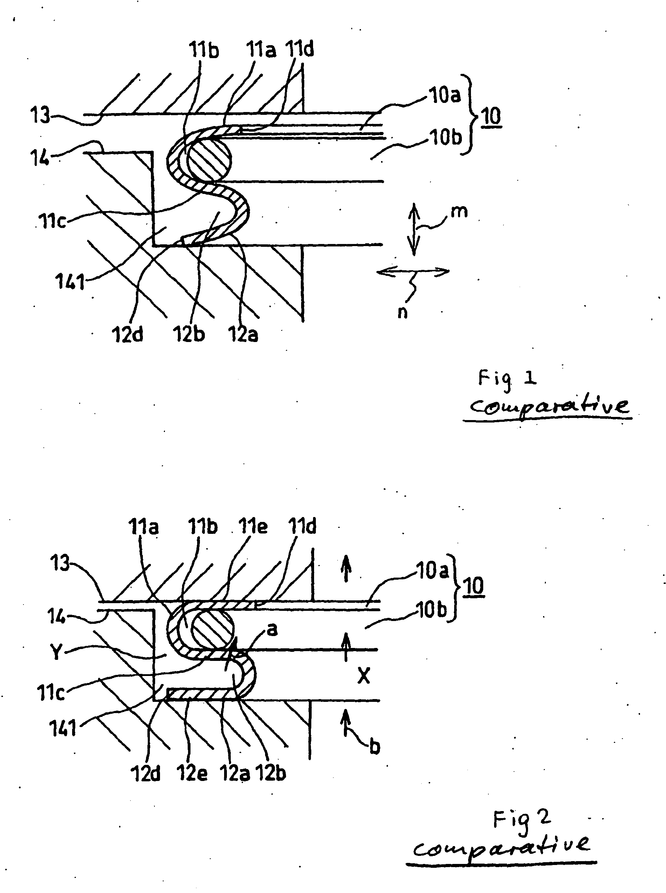

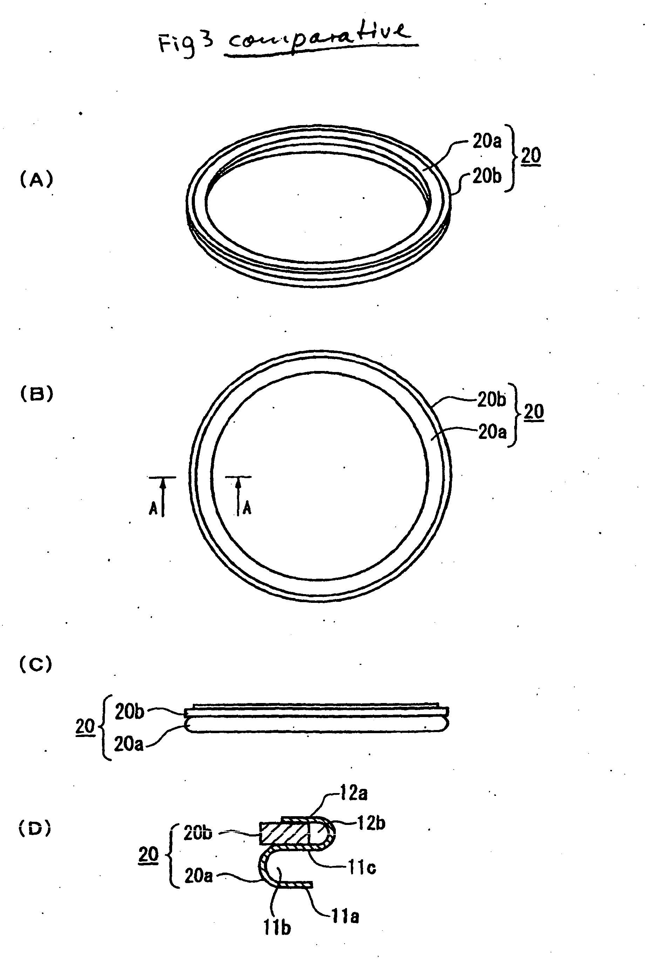

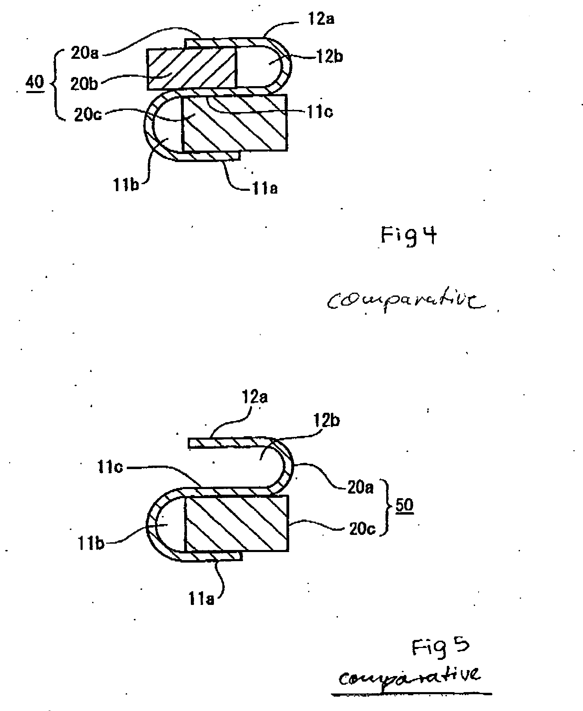

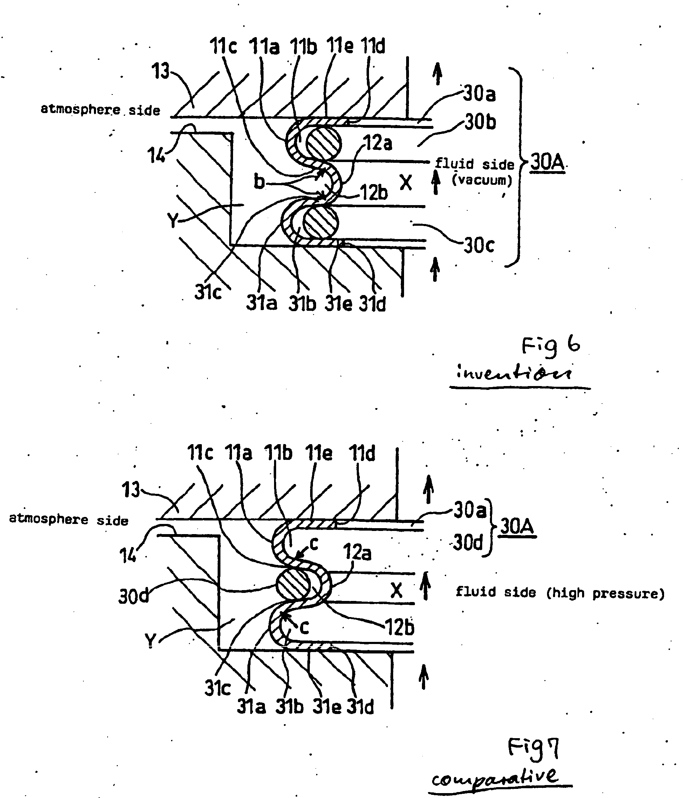

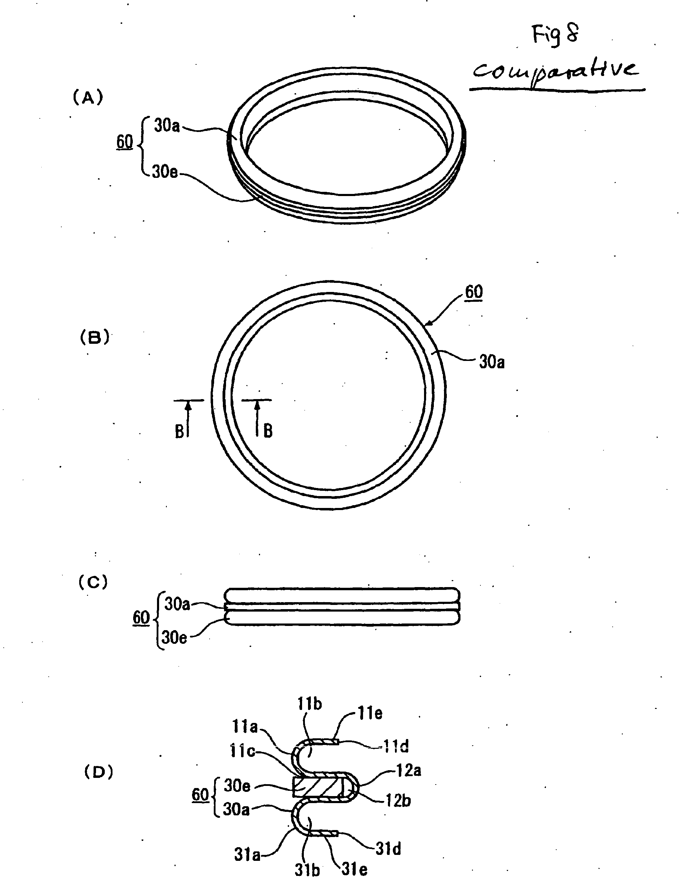

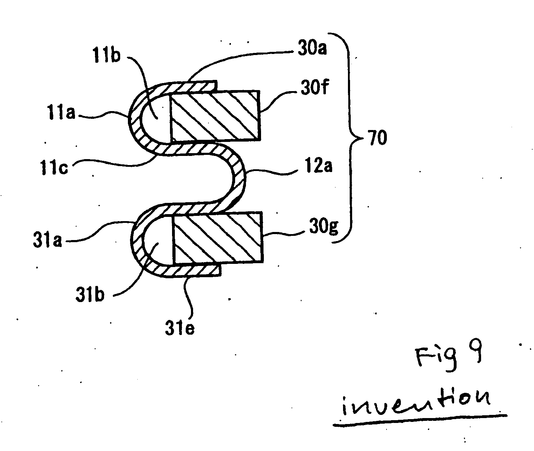

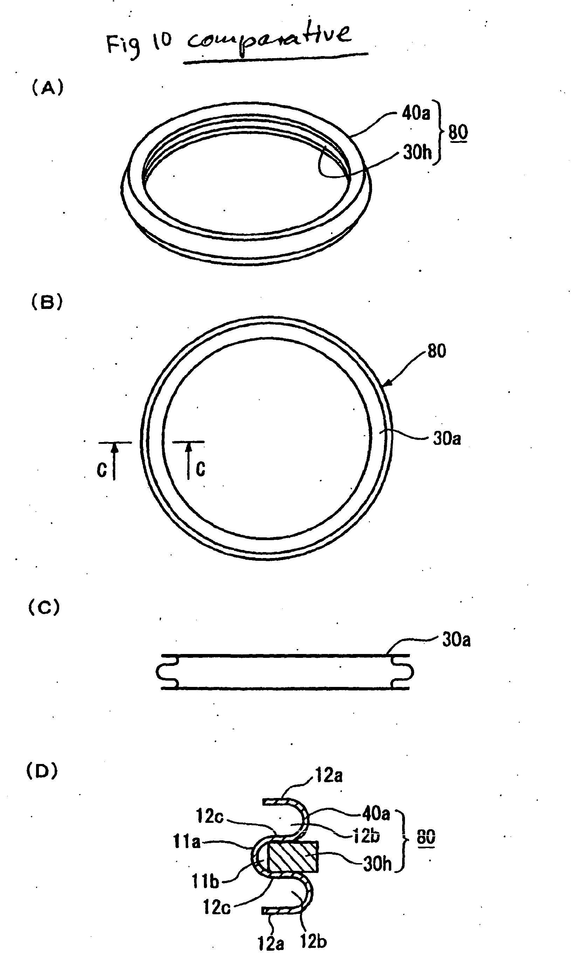

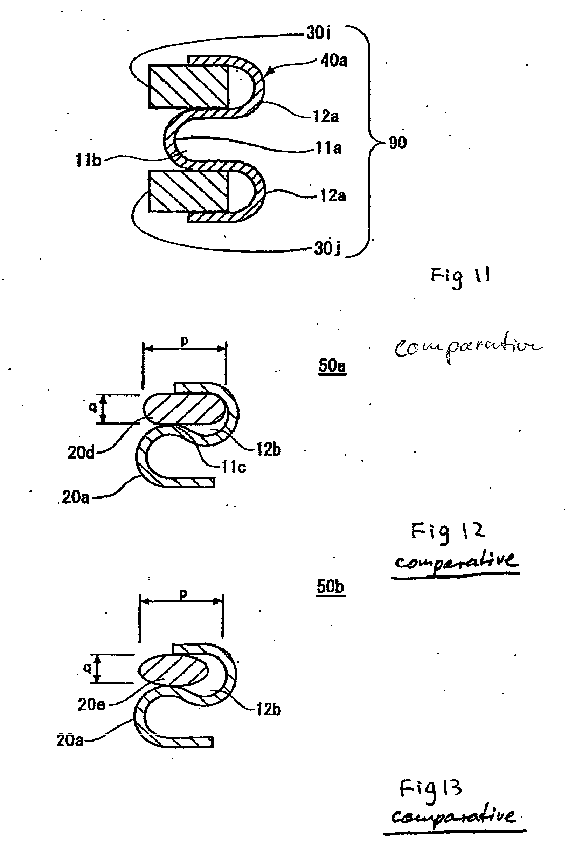

FIG. 1 is a partial sectional view showing a non-compressive condition when a comparative ring-shaped metal gasket is mounted. The arrow of a symbol m in FIG. 1 indicates a first direction and the arrow of a symbol n indicates a second direction (the same things for FIGS. 2-4). FIG. 2 is a partial sectional view showing a compression state when a comparative ring-shaped metal gasket is mounted. FIG. 3(A) is a perspective view of a comparative ring-shaped metal gasket. FIG. 3(B) is a plan view thereof, FIG. 3(C) is a front view thereof, and FIG. 3(D) is an expanded view along the line A-A of FIG. 3(B). FIG. 4 is a diagram showing a comparative ring-shaped metal gasket. FIG. 5 is a diagram showing a comparative ring-shaped metal gasket. FIG. 6 is a partial sectional view showing a compression state when an inventive ring-shaped metal gasket is mounted. FIG. 7 is a partial sectional view of a modification of the ring-shaped metal gasket of a comparative example. FIG. 8(A) is a perspective view of the ring-shaped metal gasket of a comparative example, FIG. 8(B) is a plan view thereof, FIG. 8(C) is a front view thereof and FIG. 8(D) is an expanded view taken along the line B-B of FIG. 8(B). FIG. 9 is a diagram showing a modification of an inventive ring-shaped metal gasket. FIG. 10(A) is a perspective view of the ring-shaped metal gasket of a comparative example, FIG. 10(B) is a plan view thereof, FIG. 10(C) is a front view thereof and FIG. 10(D) is an expanded view along the line C-C. FIG. 11 is a diagram showing a modification of an inventive ring-shaped metal gasket. FIGS. 12-14 are diagrams showing comparative ring-shaped metal gaskets. FIG. 15 is a partial sectional view showing a compression state when a conventional S-shaped metal gasket is mounted.

### BEST MODE FOR CARRYING OUT THE INVENTION

Next, comparative ring-shaped metal gaskets will be described with reference to FIGS. 1, 2.

The ring-shaped metal gasket 10 of this embodiment comprises a ring-shaped metal gasket 10A (hereinafter referred to as S-shaped metal gasket) having so-called S-shaped longitudinal section, in which two valleys dented in a second direction perpendicular to a first direction extending from a contact portion of one sealing object member 13 to a contact portion of the other sealing object member 14 are provided, and a metallic O-ring 10b. Here, the first direction is a direction which extends between the sealing object members 13 and 14 and the second direction is a direction perpendicular to the first direction. The S-shaped metal gasket 10a is a ring-shaped metal integrated body formed to have a section in which a C-shaped sectional portion 11 a, which is a valley dented to the non-fluid side in the second direction, and an inverted C-shaped sectional portion 12a, which is a valley dented to the fluid side in the second direction, are continuous at a junction point 11c which is an end point of the respective C shapes, and includes two valleys, a valley portion 11 b having the C-shape located on the fluid side to be sealed (right side in the same Figure) and a valley portion 12b having the inverted-C shape located on the non-fluid side on the opposite side (right side in the same Figure). The S shape does not mean such a shape in a rigid meaning and in addition to the shape shown in FIG. 1, for example, a curled shape in which the end portions 11d, 12d at the front ends of the C shape and the inverted C shape are bent inward just like a letter "C" is permitted or such a shape in which the side members of the C shape or the inverted C shape making contact with a sealing object member form flat portions as shown in FIG. 2 from when it is not compressed is also permitted.

The metallic O-ring 10b is a ring-shaped metal object having a circular section and fitted to the valley portion 11 b located on the fluid side to be sealed in FIGS. 1, 2. A preferred diameter of the circular section of the metallic O-ring 10b is of such a dimension which allows it to be fitted manually to the valley portion 11b of the S-shaped metal gasket 10a in non-compressive condition so that it makes contact with both inside faces opposing each other in the C-shaped valley portion. If the diameter of the circular section is too large, it cannot be fitted to the valley portion of the S-shaped metal gasket 10a or even if it is fitted by expanding its opening forcibly, the displacement follow-up capacity is deteriorated. If the diameter of the circular section is too small, when a large compressive load is applied, the plastic deformation of the S-shaped metal gasket 10a cannot be prevented.

As an example in which the metallic O-ring 10b is fitted to the valley portion of the S-shaped metal gasket 10a of this example, in addition to the embodiments shown in FIGS. 1, 2, there are an example in which the metallic O-ring is fitted to the valley portion 12b located on the non-fluid side of the S-shaped metal gasket 10a and an example in which two metallic O-rings are fitted to the two valley portions 11b,12b. Of these, the example in which the two metallic O-rings are fitted to the two valley portions 11 b, 12b of the S-shaped metal gasket 10a can block plastic deformation securely of the S-shaped metal gasket 10a even if a large compressive load is applied. Further, the metallic O-ring 10b is permitted to be hollow. Further instead of the metallic O-ring, it is permissible to fit a metallic rectangular section ring.

Next, ring-shaped metal gaskets will be described with reference to FIGS. 3-5. In FIGS. 3-5, like reference numerals are attached to the same components as those in FIG. 1 and description thereof is omitted while mainly different points will be described. That is, the ring-shaped metal gasket 20 is different from the ring-shaped metal gasket 10 in that an inverted S-shaped metal gasket 20a is employed instead of the S-shaped metal gasket 10a, the valley portion 12b located on the non-fluid side is smaller than the valley portion 11b located on the fluid side and a metallic ring which is fitted to the valley portion 12b located on the non-fluid side is a metallic rectangular section ring 20b. In the ring-shaped metal gasket 20, a metallic rectangular section ring 20c is also fitted to the valley portion 11b located on the fluid side (FIG. 4). In a comparative example the metallic rectangular section ring 20b in the valley portion 12b located on the non-fluid side is omitted while keeping only the metallic rectangular section ring 20c fitted to the valley portion located on the fluid side (FIG. 5).

The thickness of the metallic rectangular section rings 20b, 20c used in the ring-shaped metal gaskets 20, 40, 50 is preferred to be to such an extent that they can be fitted manually to the valley portions 11 b, 12b of the S-shaped metal gasket 20a in non-compressive condition while they make contact with both the inner side faces opposing in the C-shaped valley portion. If the thickness is too large, it cannot be fitted to the valley portions of the S-shaped metal gaskets 10a, 20a or even if its opening is expanded forcibly, the displacement follow-up capacity is deteriorated. Further, if the thickness is too small, when a large compressive load is applied, the plastic deformation of the S-shaped metal gaskets 10a, 20a cannot be prevented. The width of the metallic rectangular section rings 20b, 20c is preferred to be to such an extent that it is almost accommodated in the valley portion of the S-shaped metal gaskets 20a, 20b or it is slightly projected because a stable displacement follow-up capacity can be obtained. Further, the metallic rectangular section ring 20b is permitted to be hollow.

The manufacturing method of the S-shaped metal gaskets 10a, 20a is not restricted to any particular one, but it is manufactured by plastically deforming a predetermined metal base material corresponding to an object by combining for example, drawing, bending or pressing appropriately. As the metal base material, for example, stainless steel, nickel base alloy and the like can be mentioned. The metallic materials of the S-shaped metal gaskets 10a, 20a, the metallic O-ring 10b and the metallic rectangular section rings 20b, 20c are permitted to be the same or different. The surfaces of the S-shaped metal gaskets 10a, 20a, the metallic O-ring 10b and the metallic rectangular section rings 20b, 20c may be plated with silver.

Next, the use method of ring-shaped metal gaskets is described. As for an application place, ring-shaped metal gasket 10 is fitted to a concave portion 141 in the sealing object member 14 as shown in, for example, FIG. 1. Next, the sealing object members 13, 14 are tightened so that a gap between them is reduced. The ring-shaped metal gasket 10 is sandwiched under a predetermined compressive load so that it is kept in the tightening condition (FIG. 2). Although when the ring-shaped metal gasket 10 is tightened under a predetermined compressive load, a contact between the S-shaped metal gasket 10a and the sealing object member 13 and a contact between the S-shaped metal gasket 10a and the sealing object member 14 are carried out through the facial contacts of the flat portion 11e and the flat portion 12e, the present invention is not to be restricted to this type of contact, but for example, they may make also a linear contact as shown in FIG. 15. The use method of the inventive ring-shaped metal gaskets is the same as the aforementioned one.

According to the invention, the inventive ring-shaped metal gaskets, even if a large compressive load is applied, the metallic rings fitted into the valley portions act as reinforcement members thereby preventing the ring-shaped metal gasket having S-shaped longitudinal section from being plastically deformed blocking plastic deformation securely. Further, even if it receives vibration repeatedly under a large compressive load, similarly the metallic rings prevent the ring-shaped metallic gasket having S-shaped longitudinal section from being deformed and therefore, the gasket is difficult to undergo metal fatigue.

Preferably, in the ring-shaped metal gasket, at least one of the metallic O-rings 10b is fitted to a valley portion on a lower pressure side of the fluid side X to be sealed and the non-fluid side Y on the opposite side. For example, if the pressure P_{X} on the fluid side X to be sealed and the pressure P_{Y} on the non-fluid side Y on the opposite side are in the relationship of P_{X}≤P_{Y}, a metallic O-ring is fitted to the valley portion 11b located on the fluid side X to be sealed. Consequently, even if deformation due to a difference in pressure occurs as shown in the direction of an arrow a in FIG.2 in a gasket produced of a thin plate, this does not lead to plastic deformation so that destruction is unlikely to occur because a reinforcement metallic O-ring 10b is fitted to the deformation side. In FIG. 2, if the metallic O-ring is fitted not to the fluid side but to the valley portion 12b located on the non-fluid side although not shown here, the gasket becomes likely to be deformed in a direction in which the C shape of the C-shaped sectional portion 11a is crushed. However, because the metallic O-ring fitted to the valley portion 12b acts as a reinforcement member against a compressive load in a tightening direction (first direction), the plastic deformation of the gasket can be prevented, so that destruction is difficult to occur. Even if this metallic O-ring 10b is replaced with the metallic rectangular section ring 20b, 20c, the same effect is exerted.

In the inventive ring-shaped metal gasket, preferably, at least one of the metallic rings is fitted to the valley portion on a lower temperature side of the fluid side X to be sealed and the non-fluid side on the opposite side. For example, if the temperature pressure T_{X} on the fluid side X to be sealed and the temperature T_{Y} on the non-fluid side Y on the opposite side are in the relationship of T_{Y}≤T_{X} the metallic ring is fitted to the valley portion 12b on the non-fluid side Y. Consequently, heat received by the ring-shaped gasket is transmitted to the sealing object member and heat influence upon the metallic ring can be suppressed, thereby improving heat resistance.

Ring-shaped metal gaskets are applied to, for example, seal for vacuum apparatus and seal for pressure fluid pipe and the like. Fluid as indicated with a symbol b in FIG.2 is permitted to be any one of gas and liquid and its use temperature is in a range of -200 to 500°C. Particularly, under a high temperature condition in which the temperature on the fluid side is in a range of 300 to 500°C, the effect of the present invention can be exerted securely because the inventive ring-shaped metal gasket uses no rubber member, which is preferable.

Next, the ring-shaped metal gasket 30A will be described with references to FIGS. 6, 7. In FIGS. 6, 7, like reference numerals are attached to the same components as FIG. 2 and description thereof is omitted while mainly different points will be described. That is, the ring-shaped metal gasket 30A is different from the ring-shaped metal gasket 10 in that the S-shaped metal gasket is replaced with a metal gasket having a substantially E-shaped longitudinal section (hereinafter referred to as "substantially E-shaped metal gasket").

The ring-shaped metal gasket 30A is constituted of a combination of the substantially E-shaped metal gasket 30a and metallic O-rings. The substantially E-shaped metal gasket 30a is a ring-shaped metal integrated body formed to have such a sectional shape in which a first C-shaped section portion 11 a which is a valley portion dented to the non-fluid side in the second direction and an inverted C shaped section portion 12a which is dented to the fluid side in the second direction are continuous through a junction point 11c which serves as end portions of the respective C shapes and the inverted C-shaped section portion 12a and a second C-shaped section portion 31a, which is a dented portion to the non-fluid side in the second direction, are continuous through a junction point 31c which serves as end portions of the respective C shapes. Consequently, this has three valley portions, two valley portions 11b, 31b originated from the C shape on the fluid side to be sealed (right side in the same Figure) and a valley 12b originated from the inverted-C shape located on the non-fluid side (left side in the same Figure) on the opposite side. The substantially E shape does not mean such a shape in a rigid meaning and in addition to the shape shown in FIG. 6, the C shape or the inverted C shape may be in such a curled shape that end portions 11d, 31d are bent inward just like a letter "C". Further, the first, second C-shaped section portions 11a, 31 a and the inverted-C shaped section portion 12a do not need to be of the same shape, but for example, the inverted-C shaped section portion 12a is permitted to be like a lateral V shape which is presented by turning the V shape by 90 degrees counterclockwise.

As a comparative example in which one metallic O-ring is fitted to a valley portion of the substantially E-shaped metal gasket 30a in the ring-shaped metal gasket 30A and as an inventive example in which two metallic rings are fitted to the valley portion 11b and the valley portion 31b located on the fluid side X to be sealed (FIG. 6), and a comparative example in which a single metallic O-ring is fitted to the valley portion 12b on the non-fluid side Y (FIG. 7) and a comparative example in which three metallic O-rings are fitted to the three valley portions 11b, 12b and 31b can be mentioned. Of these, in the example in which the three metallic O-rings are fitted to the three valley portions 11 b, 12b and 31b the plastic deformation of the substantially E shaped metallic gasket 10a can be prevented securely even if a large compressive load is applied.

According to the ring-shaped metal gasket 30A, even if a large compressive load is applied, the metallic O-rings fitted to the valley portion act as a reinforcement member thereby preventing the plastic deformation of the ring-shaped metal gasket having the substantially E-shaped longitudinal section and blocking plastic deformation. Further, even if vibration is received repeatedly under a large compressive load, the inventive gasket is hard to undergo metal fatigue because the deformation of the ring-shaped metal gasket having the substantially E-shaped longitudinal section is prevented by the metallic O-ring likewise.

Next, ring-shaped metal gaskets will be described with reference to FIGS. 8, 9. In FIGS. 8, 9, like reference numerals are attached to the same components as FIG. 6 and description thereof is omitted while mainly different points will be described. That is, the ring-shaped metal gasket 60 is different from the ring-shaped metal gasket 30A in that a metallic rectangular section ring 30e is employed as a metallic ring to be fitted to the valley portion 12b located on the non-fluid side and that the valley portion 12b located on the non-fluid side is formed deep. In the ring-shaped metal gasket 60, the metallic rectangular section ring 30e fitted to the valley portion 12b located on the non-fluid side can be omitted and metallic rectangular section rings 30f, 30g can be fitted to the valley portions 11b, 31b. An inventive ring-shaped metal gasket of this kind is shown in figure 9.

Next, ring-shaped metal gaskets will be described with reference to FIGS. 10, 11. In FIGS. 10, 11, like reference numerals are attached to the same components as FIG. 8 and description thereof is omitted while mainly different points will be described. That is, the ring-shaped metal gasket 80 is different from the ring-shaped metal gasket 60 in that an inverted-E shaped metal gasket 40a is employed instead of the substantially-E shaped metal gasket 30a, the two valley portions 12b provided on the non-fluid side are formed to be smaller than the valley portion 11 b provided on the fluid side to be sealed and a metallic rectangular section ring 30h is fitted to the valley portion 11 b provided on the fluid side. In a ring-shaped metal gasket 80, one omits the metallic rectangular section ring 30h which is fitted to the valley portion 11 b provided on the fluid side and fit the metallic rectangular section rings 30i, 30j to the valley portions 12b, 12b located on the non-fluid side (FIG. 11).

In the ring-shaped metal gaskets 60, 80, 90, preferably, at least one of the metallic rings is fitted to the valley portion on a lower pressure side of the fluid side X to be sealed and the non-fluid side Y on the opposite side. For example, in case of sealing the vacuum apparatus as shown in FIG. 6, if the pressure P_{X} on the fluid side X to be sealed and the pressure P_{Y} on the non-fluid side Y on the opposite side are in the relationship of P_{X}≤P_{Y}, metallic O-rings 30b, 30c are fitted to the valley portion 11b and the valley portion 31 b located on the fluid side X to be sealed. Further, in case of sealing a high pressure fluid pipe as shown in FIG. 7, if the pressure P_{X} on the fluid side to be sealed and the pressure P_{Y} on the non-fluid side Y on the opposite side are in the relationship of P_{X}≤P_{Y}, a metallic O-ring 30d is fitted to the valley portion 12b on the non-fluid side. Consequently, in case of a gasket produced of thin plate, even if deformation due to a difference in pressure occurs in the direction of an arrow b (FIG. 6) or in the direction of an arrow c (FIG. 7), this does not lead to plastic deformation thereby possibly causing no damage because the reinforcement metallic O-rings 30b, 30c (FIG. 6) or 30d is fitted thereto. If one metallic O-ring is fitted not to the fluid side but to the valley portion 12b located on the non-fluid side although not shown, the gasket becomes likely to be deformed in a direction in which the shape C of the C-shaped section portion 11a, 31a is crushed, however because the metallic O-ring fitted to the valley portion 12b acts as a reinforcement member against a compressive load in the tightening direction (first direction), the plastic deformation of the gasket can be prevented thereby possibly causing no damage also. In the meantime, the same effect is exerted even if the metallic O-ring is a metallic rectangular section ring.

In the ring-shaped metal gaskets 60, 80, 90, preferably, one of the metallic rings is fitted to the valley portion located on a lower temperature side of the fluid side X to be sealed and the non-fluid side on the opposite side. For example, if the temperature pressure T_{X} on the fluid side X to be sealed and the temperature T_{Y} on the non-fluid side Y located on the opposite side are in the relationship of T_{Y}≤T_{X}, the metallic ring is fitted to the valley portion 12b located on the non-fluid side Y. Consequently, heat received by the ring-like gasket is transmitted to a sealing object member so as to suppress heat influence upon the metallic ring, so that its heat resistance is improved.

The ring-shaped metal gaskets 30A, 60, 70, 80, 90 can be used at the same use position as the ring-shaped metal gasket 10 and the use condition and effect are the same also.

Comparative ring-shaped metal gaskets will be described with reference to FIGS. 12-14. In FIG. 12, like reference numerals are attached to the same components as FIG. 2 and description thereof is omitted while mainly different points will be described. That is, the ring-shaped metal gasket 50a of the sixth example is different from the ring-shaped metal gasket 10 shown in FIG. 2 in that the inverted-S shaped metal gasket 20a is employed instead of the S-shaped metal gasket 10a and that a metallic irregular cross section ring 20d is fitted to the valley portion 12b located on the non-fluid side. The metallic irregular cross section ring 20d is not restricted to any particular one as long as the maximum dimension p in the diameter direction (n direction) in its longitudinal section is larger than the maximum dimension q in a direction (m direction) perpendicular to the diameter direction and for example, a metallic elliptic cross section ring 20e (FIG. 13), a metallic oval cross section ring 20f (FIG. 14), the metallic rectangular cross section ring 20b (FIG. 13(D))and the like can be mentioned. In case of the ring-shaped metal gasket 50a-50c, the effect of suppressing plastic deformation in the vicinity of the junction point 11c between the C-shaped section portion and the inverted-C shaped section portion is considerably high.

Although two sealing object members on which the ring-shaped metal gasket of the present invention is mounted are sealing object members comprising one flange and a mating flange, the present invention is not restricted to this example, but this is applicable to sealing for, for example, sealing object members used in half cut condition, sealing object members formed of different materials and the like.

In the ring-shaped metal gasket of the present invention which is disposed between two sealing object members and in which at least two pieces of the valley portions dented in the second direction perpendicular to the first direction extending from the contact portion of one sealing object member to the contact portion of the other sealing object member are provided, because the metallic rings, for example, the metallic O-rings or the metallic rectangular cross section rings are fitted to at least two of the valley portions, even if an excessive compressive load is applied, the metallic rings fitted to the valley portion act as reinforcement members, suppressing the plastic deformation of the ring-shaped metal gasket and block plastic deformation and at the same time, preventing generation of metal fatigue in the ring-shaped metal gasket. Further, if the metallic rings are provided in the valley portions of both the fluid side and non-fluid side, an influence on the metal gasket by changes in pressure between the fluid side and non-fluid side can be suppressed.

If at least one of the metallic rings is fitted to the valley portion on a lower pressure side of valleys on the fluid side to be sealed and the non-fluid side on the opposite side, even if a difference in pressure between the fluid side to be sealed and the non-fluid side on the opposite side increases, the thickness of the ring-shaped metal gasket can be reduced because a reinforcement metallic ring is fitted to the deformation side, so that a damage due to the reduced thickness can be prevented.

If at least one of the metallic rings is fitted to the valley portion on a lower temperature side of valleys on the fluid side to be sealed and the non-fluid side on the opposite side, heat received by the ring-shaped gasket is transmitted to a sealing object member, so that heat influence upon the metallic ring can be suppressed and at the same time, its heat resistance is improved.

If the metallic rings are fitted to all the valley portions of the ring-shaped metal gasket, it is not necessary to take care of a position (direction) in which the metallic ring is fitted when the ring-shaped metal gasket is installed and therefore, a mistake in installation can be prevented. Further, because this ring-shaped metal gasket can substitute a gasket in which a metallic ring is fitted to only one side of plural valley portions, it is not necessary to prepare a gasket in which the metallic ring is fitted to only this one side and therefore, the quantity of components can be reduced.

The ring-shaped metal gasket of the present invention has a high effect of suppressing and blocking the plastic deformation in the vicinity of the junction point between the C-shaped section portion and the inverted-C shaped portion in the, for example, S-shaped or inverted-S shaped metal gasket even if an excessive compressive load is applied.

The ring-shaped metal gasket of the present invention increases a room for material selection when manufacturing the ring-shaped metal gasket.

### INDUSTRIAL APPLICABILITY

The present invention is applicable as seal for a vacuum apparatus, a sealing gasket of a pressure fluid pipe and the like.

## Claims

1. A ring-shaped sealing metal gasket of stable displacement follow-up capacity, which is adapted to be disposed between two sealing object members subject to displacement in a state of compression and in which at least two pieces of valley portions dented in a second direction perpendicular to a first direction extending from a contact portion of one sealing object member to the other sealing object member are provided, wherein said sealing metal gasket is adapted to seal a fluid side X from a non-fluid side Y, said fluid side X bridging the two sealing object members, and wherein each valley portion is arranged separatingly between said fluid side X and said non-fluid side Y **characterised in that** a plurality of metallic rings are fitted to at least two valley portions said rings being, located only on said fluid side X and that each ring contacts the inner side faces opposing in the C-shaped valley portions in non-compressive condition, blocking plastic deformation of the metal gasket upon a large compressive load.

2. Use of a ring-shaped metal gasket according to claim 1 wherein the plurality of said metallic rings are fitted to the valley portions on a lower pressure side of a fluid side to be sealed and a non-fluid side non the opposite side.

3. Use of a ring-shaped metal gasket according to claim 1 wherein the plurality of said metallic rings are fitted to the valley portions on a lower temperature side of the fluid side to be sealed and the non-fluid side on the opposite side.

4. The ring-shaped metal gasket according to any one of claim 1-3 wherein the maximum dimention in the diameter direction of a longitudinal section is larger than the maximum dimension in a direction perpendicular to the diameter direction.

5. The ring-shaped metal gasket according to claim 4 wherein said metallic ring is a metallic O-ring, metallic irregular cross section ring or metallic rectangular cross section ring.

## Patentansprüche

1. Ringförmige Metalldichtung mit stabilem Verlagerungsfolgevermögen, welche dazu ausgelegt ist, zwischen zwei Dichtungsobjektelementen, die im Zustand der Stauchung einer Verlagerung unterliegen, angeordnet zu werden, und bei welcher mindestens zwei eingebuchtete Bereiche vorgesehen sind, die in einer zweiten Richtung senkrecht zu einer ersten Richtung, die sich von einem Kontaktbereich eines der Dichtungsobjektelemente zu dem anderen Dichtungsobjektelement erstreckt, eingebuchtet sind, wobei die Metalldichtung dazu ausgelegt ist, eine Fluid-Seite X gegen eine Nicht-Fluid-Seite Y abzudichten, wobei die Fluid-Seite X die beiden Dichtungsobjektelemente überbrückt und wobei jeder eingebuchtete Bereich trennend zwischen der Fluid-Seite X und der Nicht-Fluid-Seite Y angeordnet ist, **dadurch gekennzeichnet, dass** eine Anzahl von Metallringen in wenigstens zwei eingebuchtete Bereiche eingesetzt ist, wobei sich die Ringe lediglich auf der Fluid-Seite X befinden, und dass im nicht gestauchten Zustand jeder Ring mit den in den C-förmigen eingebuchteten Bereichen einander gegenüberliegenden Innenflächen in Kontakt ist, wobei eine plastische Verformung der Metalldichtung bei einer großen Drucklast verhindert wird.

2. Verwendung einer ringförmigen Metalldichtung nach Anspruch 1, bei welcher die Anzahl von Metallringen auf der abzudichtenden Fluid-Seite oder auf der, dieser gegenüber liegenden, Nicht-Fluid-Seite in die eingebuchteten Bereiche eingesetzt ist, und zwar auf derjenigen Seite, welche den niedrigeren Druck aufweist.

3. Verwendung einer ringförmigen Metalldichtung nach Anspruch 1, bei welcher die Anzahl von Metallringen auf der abzudichtenden Fluid-Seite oder auf der, dieser gegenüber liegenden, Nicht-Fluid-Seite in die eingebuchteten Bereiche eingesetzt ist, und zwar auf derjenigen Seite, welche die niedrigere Temperatur aufweist.

4. Ringförmige Metalldichtung nach einem der Ansprüche 1-3, bei welcher die maximale Abmessung in der Durchmesserrichtung eines Längsschnitts größer ist als die maximale Abmessung in einer zur Durchmesserrichtung senkrechten Richtung.

5. Ringförmige Metalldichtung nach Anspruch 4, bei welcher der Metallring ein O-Ring aus Metall, ein Metallring mit unregelmäßigem Querschnitt oder ein Metallring mit rechtwinkligem Querschnitt ist.

## Revendications

1. Joint d'étanchéité métallique de forme annulaire à capacité de suivi de déplacement stable, qui est adapté à être disposé entre deux éléments objets d'étanchéisation susceptibles de déplacement dans un état de compression et dans lequel deux pièces de parties de vallée indentées dans une deuxième direction perpendiculaire à une première direction s'étendant d'une partie de contact d'un élément objet d'étanchéisation jusqu'à l'autre élément objet d'étanchéisation sont prévues, dans lequel ledit joint d'étanchéité métallique est adapté à étanchéifier un côté de fluide X d'un côté de non fluide Y, ledit côté de fluide X pontant les deux éléments objets d'étanchéisation, et dans lequel chaque partie de vallée est agencée de façon séparante entre ledit côté de fluide X et ledit côté de non fluide Y, **caractérisé en ce qu'**une pluralité d'anneaux métalliques sont disposés sur au moins deux parties de vallée, lesdits anneaux n'étant situés que sur ledit côté de fluide X et **en ce que** chaque anneau est en contact avec les faces latérales intérieures en opposition dans les parties de vallée en forme de C dans un état non compressé, bloquant la déformation plastique du joint métallique en cas de force compressive élevée.

2. Utilisation d'un joint d'étanchéité métallique de forme annulaire selon la revendication 1 dans laquelle la pluralité desdits anneaux métalliques sont disposés sur les parties de vallée sur un côté de moindre pression d'un côté de fluide devant être étanchéifié et un côté de non fluide sur le côté opposé.

3. Utilisation d'un joint d'étanchéité métallique de forme annulaire selon la revendication 1 dans laquelle la pluralité desdits anneaux métalliques sont disposés sur les parties de vallée sur un côté de moindre température du côté de fluide devant être étanchéifié et le côté de non fluide sur le côté opposé.

4. Joint d'étanchéité métallique de forme annulaire selon l'une quelconque des revendications 1-3 dans lequel la dimension maximum dans le sens du diamètre d'une section longitudinale est plus grande que la dimension maximum dans un sens perpendiculaire au sens du diamètre.

5. Joint d'étanchéité métallique de forme annulaire selon la revendication 4 dans lequel ledit anneau métallique est un anneau torique métallique, un anneau métallique à section transversale irrégulière ou un anneau métallique à section transversale rectangulaire.
